# EUROPÄISCHE PATENTSCHRIFT

(11) **EP 1 657 270 B1**
(45) Veröffentlichungstag und Bekanntmachung des Hinweises auf die Patenterteilung: **14.12.2011**
(21) Anmeldenummer: 05023723.9
(22) Anmeldetag: 29.10.2005
(51) Int. Cl.: C08G 63/00, C08J 3/03

(54) **Polyester-Polyacrylat-Dispersionen mit Reaktivverdünnern auf Basis von Lactongruppenhaltigen Verbindungen**
Polyester-acrylic dispersions with reactive diluent based on lactone-containing compounds
Dispersions de polyester-acrylique comportant un diluant réactif contenant une lactone

(30) Priorität: 11.11.2004 DE 102004054499
(43) Veröffentlichungstag der Anmeldung: 17.05.2006
(73) Patentinhaber: Bayer MaterialScience AG, 51368 Leverkusen (DE)
(72) Erfinder: Gertzmann, Rolf, Dr., 51377 Leverkusen (DE); Gewiss, Heinz-Dietmar, 40668 Meerbusch (DE); Münzmay, Thomas, Dr., 41539 Dormagen (DE); Melchiors, Martin, Dr., 42799 Leichlingen (DE)

(56) Entgegenhaltungen:
- EP-A- 0 980 881
- DE-A1- 3 910 829
- US-A- 6 139 918

## Beschreibung

Die Erfindung betrifft wässrige Polymerisatdispersionen mit niedrigem Lösemittelgehalt auf Basis von hydrophilen Polyacrylat-Polyester-Harzmischungen sowie von lactongruppenhaltigen Reaktivverdünnern, ein Verfahren zu deren Herstellung sowie wässrige Beschichtungsmittel auf dieser Basis und deren Verwendung als Lacke.

Aus dem Stand der Technik ist bekannt, dass in Beschichtungssystemen wasserverdünnbare Bindemittel auf Copolymerbasis eingesetzt werden. Diese enthalten jedoch in der Regel niedermolekulare Emulgatoren zur Stabilisierung und/oder größere Anteile organischer Colösemittel. Üblicherweise beeinflussen die Emulgatoren die Eigenschaften der Lacke bzw. der Beschichtungen, wie z.B. deren Wasserfestigkeit, Filmoptik (Glanz), Pigmentierfähigkeit in negativer Weise.

Die Verwendung größerer Mengen organischer Lösemittel ist aus ökologischen Gründen unerwünscht, jedoch meist nicht zu vermeiden, da bei der Polymerisatherstellung eine ausreichende Rührbarkeit und Wärmeabfuhr der Reaktionsmischung gewährleistet sein muss. Zusätzlich führen organische Lösemittel in wässrigen Beschichtungsmitteln zu vorteilhaften Effekten, wie zu einer verbesserten Lagerstabilität und Pigmentbenetzung, einer besseren Filmoptik und einem besseren Verlauf.

Andererseits ist eine nachträgliche Reduzierung der Lösemittel aus Copolymerisaten oder -dispersionen mit hohem apparativen und energetischen Aufwand verbunden, so dass Bedarf an wässrigen Polymerisatdispersionen besteht, bei deren Herstellung auf die Verwendung organischer Lösemittel weitgehend verzichtet werden kann, ohne dass eine Verschlechterung der anwendungstechnischen Eigenschaften auftritt.

Polymerisatdispersionen, welche durch eine chemische Reaktion, z.B. mit einem Aminoplastharz, einem blockierten Polyisocyanat oder einem Polyisocyanat ausgehärtet werden sollen, müssen eine bestimmte Menge an reaktiven Gruppen, z.B. Hydroxygruppen, enthalten. Diese Gruppen werden in der Regel durch die Mitverwendung hydroxyfunktioneller (Meth)acrylsäureester bei der Copolymerisation in das Copolymer eingebracht. Diese Rohstoffe sind allerdings, im Vergleich zu den nichtfunktionellen (Meth)acrylsäureestern oder auch zu Styrol, sehr teuer. Zudem müssen häufig auch größere Mengen dieser Rohstoffe im Vergleich zu organisch gelösten Copolymerisaten eingesetzt werden, um durch eine größere Vernetzungsdichte die Hydrophilie der Lackfilme zu kompensieren.

In der DE-A 39 10829 werden hitzehärtbare Überzugmittel auf Polyesterpolyacrylatbasis beschrieben, die einen Lösemittelgehalt zwischen 5 und 20 Gew.-%, bezogen auf das applikationsfertige Beschichtungsmittel aufweisen. Als bevorzugte Lösemittel werden mit Wasser mischbare Alkohole, Ketone oder Glykolether oder aber auch nicht mit Wasser mischbare Lösungsmittel genannt. Da die offenbarten Lösemittel nicht in die Beschichtung eingebaut werden, werden diese während der Verarbeitung des Beschichtungssystems als VOC (Volatile Organic Compound) wieder freigesetzt. Die erwähnten, schwerflüchtigen Glykolderivate verbleiben zum Teil in der Beschichtung und können deren Eigenschaften verschlechtern.

Einen anderen Weg zur Herstellung hydroxyfunktioneller Copolymerisatsekundärdispersionen, der den Einsatz von Lösungsmitteln bei der Polymerisation weitgehend vermeidet, wird in der EP-A 0 758 007 beschrieben. Dort werden die üblicherweise eingesetzten Lösemittel ganz oder teilweise durch hydroxyfunktionelle Polyether ersetzt. Die hydroxyfunktionellen Polyether verbleiben als Reaktivverdünner in der Sekundärdispersion und reagieren bei der späteren Vernetzung mit Isocyanaten oder blockierten Isocyanaten unter Urethanbildung ab. Als nachteilig an diesen Produkten erweist sich jedoch ihre schlechte Beständigkeit, insbesondere der Bewitterungsbeständigkeit.

In der GB-A 2 078 766 wird ein Weg beschrieben, den Lösemittelgehalt in Lacken während der Lackherstellung zu redzuieren. Dabei werden lösemittelhaltige Bindemittel mit in der Lackindustrie üblichen Pigmenten und Additiven unter Verwendung verschiedener Reaktivverdünner hergestellt. Bei den Reaktiwerdünnern handelt es sich um Umsetzungsprodukte von Glycidylestern mit hydroxyl- oder carboxylgruppenhaltigen Verbindungen. Der Nachteil der in der GB-A 2 078 766 beschriebenen Lacke besteht in dem, trotz Verwendung des Reaktiwerdünners, hohen Lösemittelgehalt, da durch das Bindemittel erhebliche Mengen eines Colösers eingebracht werden. In Beispiel I der GB-A 2 078 766 wird z.B. ein Bindemittel mit einem Lösemittelgehalt von 35 Gew.-% eingesetzt.

In der US-A 6,139,918 werden Beschichtungsmitttel offenbart, die aus einem Polyesterpolyacrylat als Polyolkomponente A) und einem blockierten Polyisocyanat als Vernetztgerkomponente B) aufgebaut sind. Die Komponente A) wird hergestellt, indem die Polyacrylat-Kompoentene (AII) in Anwesenheit des Polyesters (AI) polymerisiert wird. Das Polyesterpolyacrylat gemäß US-A 6,139,918 enthält größere Mengen an organischen Lösungsmitteln. Dies ist jedoch nachteilig, da die organischen Lösungsmittel während der Verarbeitung des Beschichtungssystems als VOC (volatile organic compound) wieder freigesetzt werden.

Aufgabe der vorliegenden Erfindung bestand somit in der Bereitstellung von Polymerisatdispersionen aus hydrophilierten Polyacrylatharzen und Polyesterharzen, die sich ohne Einsatz von Emulgatoren oder größerer Mengen an organischen Lösungsmitteln herstellen lassen und Beschichtungen mit sehr guten mechanischen und optischen Eigenschaften ergeben.

Es wurde nun gefunden, dass wässrige Polymerisatdispersionen, basierend auf Mischungen aus carboxylat- und hydroxyfunktionellen Polyacrylatharzen und Polyestern mit einem Lösemittelgehalt unter 5 Gew.-%, bezogen auf die Dispersion, und hohem Beständigkeitsniveau der Lackfilme hergestellt werden können, wenn hydroxyfunktionelle Polycaprolactone als Reaktivverdünner eingesetzt werden.

Gegenstand der vorliegenden Erfindung ist somit ein Verfahren zur Herstellung wässriger Polyester-Polyacrylat-Dispersionen mit einem Gehalt an organischen Lösungsmitteln von 0 bis 5 Gew.-%, bevorzugt von 1 bis 3 Gew.-%, bezogen auf die Dispersion, dadurch gekennzeichnet, dass in einem ersten Schritt ein Polymerisat (P) durch Polymerisation
A) einer Mischung zur radikalischen Copolymerisation befähigter Vinylmonomeren A1) bis A4) enthalten Bausteine ausgewählt aus der Gruppe der Verbindungen:
   A1) OH-gruppenfreie (Meth)acrylsäureester, gegebenenfalls in Mischung mit Vinylaromaten,
   A2) hydroxyfunktionelle Vinylmonomere und/oder hydroxyfunktionelle (Meth)acrylsäureester,
   A3) ionische und/oder potentiell ionische, zur radikalischen Polymerisation befähigte Monomere sowie
   A4) weitere, von den Verbindungen der Komponenten A1) bis A3) verschiedene, zur radikalische Polymerisation befähigte Monomere
   in Gegenwart
B) mindestens einem Oligoester, basierend auf lactongruppenhaltigen Verbindungen mit einer Hydroxylzahl von 145 mg KOH/g bis 710 mg KOH/g, einer Säurezahl von ≤0,5 mg KOH/g und einer mittleren OH Funktionalität von 2,5 bis 5, bevorzugt 2,8 bis 3,2
   hergestellt wird, und dann in einem zweiten Schritt mit
C) einem oder mehreren Polyesterpolyol(en) mit einer Hydroxylzahl von 10 bis 500, bevorzugt 80 bis 350 mg KOH/g Substanz und einer Säurezahl von > 0,5 bis ≤30, bevorzugt ≥1 bis ≤8 mg KOH/g Substanz vermischt wird und das so erhaltene Polymerisatgemisch (P') anschließend in einem weiteren Schritt vor oder nach Zugabe eines Neutralisationsmittels in Wasser dispergiert wird.

Gegenstand der vorliegenden Erfindung sind ebenfalls wässrige Polyester-Polyacrylat-Polymerisat-Dispersionen erhältlich gemäß dem erfindungsgemäßen Verfahren.

Geeignete Vinylinonomermischungen A) enthalten Bausteine ausgewählt aus der Gruppe der Verbindungen:
A1) OH-gruppenfreie (Meth)acrylsäureester, gegebenenfalls in Mischung mit Vinylaromaten,
A2) hydroxyfunktionelle Vinylmonomere und/oder hydroxyfunktionelle (Meth)acrylsäureester,
A3) ionische und/oder potenziell ionische, zur radikalischen Polymerisation befähigte Monomere sowie
A4) weitere, von den Verbindungen der Komponenten A1) bis A3) verschiedene, zur radikalischen Polymerisation befähigte Monomere.

Als Monomere der Komponente A1) werden Acrylate und Methacrylate (im Folgenden als (Meth)Acrylate bezeichnet) mit 1 bis 18 Kohlenstoffatomen im Alkoholteil der Estergruppe eingesetzt. Dieser Alkoholteil kann linear-, verzweigt- oder cycloaliphatisch sein.

Beispielsweise geeignet als Monomere der Komponente A1) sind Methyl-, Ethyl-, n-Propyl-, Isopropyl-, n-Butyl-, Isobutyl-, t-Butyl-, die isomeren Pentyl-, Hexyl-, Octyl-, Dodecyl-, Hexadecyl-, Octadecyl- oder Cyclohexyl-, Trimethylcyclohexyl- und Isobornyl(meth)acrylate. Ferner können als A1) auch Acetoacetoxyethylmethacrylat, Acrylamid, Diacetonacrylamid, Acrylnitril, Styrol, Vinylether, Methacrylnitril, Vinylacetate, gegebenenfalls substituierte Styrole und Vinyltoluole eingesetzt werden.

Bevorzugt sind Methyl-, Isopropyl-, n-Butyl-, Isobutyl-, t-Butyl-, 2-Ethylhexyl-, Cyclohexyl- und Isobornyl(meth)acrylate sowie Styrol.

Ebenfalls möglich und bevorzugt ist der Einsatz beliebiger Mischungen der vorstehend genannten Verbindungen A1).

Als Komponente A2) sind ethylenisch ungesättigte, hydroxylgruppenhaltige Monomere geeignet, wie beispielsweise die Hydroxyalkylester ungesättigter Carbonsäuren, bevorzugt Hydroxyalkyl-(meth)acrylate mit 2 bis 12, bevorzugt 2 bis 6 Kohlenstoffatomen im Hydroxyalkylrest. Bevorzugte Verbindungen sind 2-Hydroxyethyl(meth)acrylat, die isomeren Hydroxypropyl(meth)acrylate, 2-, 3- und 4-Hydroxybutyl(meth)acrylate, die isomeren Hydroxyhexyl(meth)acrylate sowie 1,4-Cyclohexandimethanolmonomethacrylat.

Ebenfalls geeignet sind mit Alkylenoxiden modifizierte oder kettenverlängerte, polymerisierbare hydroxyfunktionelle Monomere mit einem zahlenmittleren Molekulargewicht ≤ 3000 g/mol, bevorzugt ≤ 700 g/mol. Als Alkylenoxide kommen hierfür bevorzugt Ethylen-, Propylen-oder Butylenoxid einzeln oder in Mischungen zum Einsatz. Als Beispiele seien genannt Bisomer® PEA3 (Polyethylenglykolmonoacrylat; 3 Ethylenoxideinheiten), Bisomer® PEM 6 LD (Polyethylenglykolmonomethacrylat; 6 Ethylenoxideinheiten), Bisomer® PEM 63 E (Polyethylenglykolmonomethacrylate; 6 Propylenoxideinheiten und 3 terminale Ethylenoxideinheiten) oder Bisomer® PEM 63 P (Polyethylenglykolmonomethacrylate; 6 Ethylenoxideinheiten und 3 terminale Propylenoxideinheiten) der Fa. Degussa AG (Darmstadt, Deutschland).

Des Weiteren ist die Zugabe polymerisierbarer, nicht-ionisch hydrophilierend wirkende Alkoxypolyethylenglykol-(meth)acrylate mit zahlenmittleren Molekulargewichten (Mn) von 430 bis 2500 g/mol geeignet. Als Beispiele seien hier genannt Bisomer® MPEG 350 MA (Mn = 430 g/mol), 550 MA (Mn = 628 g/mol), S 7 W (Mn = 818 g/mol), S 10 W (Mn = 1080 g/mol) und S 20 W (Mn = 2080 g/mol) der Fa. Degussa AG (Darmstadt, Deutschland).

Unter ionisch bzw. potenziell ionisch hydrophilierenden Verbindungen A3) werden sämtliche Verbindungen verstanden, die mindestens eine zur radikalischen Polymerisation befähigte Gruppe sowie mindestens eine Funktionalität, wie -COOY, -SO₃Y, -PO(OY)₂ (Y beispielsweise = H, NH₄⁺, Metallkation), ―NR₂ oder -NR₃⁺ (R = H, Alkyl, Aryl, Reste R können in einem Molekül gleich oder verschieden voneinander sein), aufweisen, die bei Wechselwirkung mit wässrigen Medien ein pH-Wert-abhängiges Dissoziationsgleichgewicht eingehen und auf diese Weise negativ, positiv oder neutral geladen sein können.

Ionische und/oder potenziell ionische, zur radikalischen Polymerisation befähigte Monomeren der Komponente A3) sind bevorzugt olefinisch ungesättigte Monomere mit Carbonsäure- oder Carbonsäureanhydrid-Gruppen, wie z.B. Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester geeignet, besonders bevorzugt sind Acrylsäure und/oder Methacrylsäure.

Ferner geeignet als Verbindungen der Komponente A3) sind auch ungesättigte, radikalisch polymerisierbare Verbindungen mit Phosphat- bzw. Phosphonat- oder Sulfonsäure- bzw. SulfonatGruppen, wie z.B. in der WO-A 00/39181 (S. 8 Z. 13 - S. 9 Z. 19) beschrieben. Innerhalb der Gruppe der Phosphat- bzw. Phosphonat- oder Sulfonsäure- bzw. Sulfonatgruppen aufweisenden Komponenten ist 2-Acrylamido-2-methylpropansulfonsäure eine bevorzugte Komponente.

Gegebenenfalls können auch weitere, von A1) bis A3) unterschiedliche, zur radikalischen Polymerisation befähigte Monomere als Verbindungen der Komponente A4) eingesetzt werden. Dies können beispielsweise di- oder höher-funktionelle (Meth)acrylatmonomere und/oder Vinylmonomere, wie z.B. Ethandioldi(meth)acrylat, Hexandioldi(meth)acrylat, 1,4-, 1,3-Butandioldimethacrylat, Di-, Tri- und Oligoethylenglykoldimethacrylate, Polypropylenglykoldimethacrylate, Polytetramethylenglykoldimethacrylate oder Divinylbenzol sein.

Bevorzugt erfolgt die Hydrophilierung der Polymerisate (P) nur durch ionische und/oder potenziell ionische Gruppen. Besonders bevorzugt erfolgt die Hydrophilierung durch anionische und/oder potenziell anionische Gruppen.

Die Mengenverhältnisse der Aufbaukomponenten A1) bis A4) werden typischerweise so gewählt, dass das Polymerisat (P) eine OH-Zahl von 12 bis 350 mg KOH/g, bevorzugt von 20 bis 200 mg KOH/g und besonders bevorzugt von 50 bis 150 mg KOH/g Feststoff und einer Säurezahl von 5 bis 80 mg KOH/g, bevorzugt 10 bis 35, besonders bevorzugt von 15 bis 30 mg KOH/g Feststoff aufweist.

Als geeignete Oligoester B) kommen Umsetzungsprodukte aus den dem Fachmann bekannten Lactonen b1) mit Di- und/oder höherfunktionellen Alkohlen b2) in Betracht.

Geeignete Lactone b1) sind γ-Butyrolacton, Valerolacton und ε-Caprolacton sowie beliebige Mischungen dieser Lactone. Besonders bevorzugt wird ε-Caprolacton verwendet.

Die niedermolekularen Alkohole b2) sind typischerweise die dem Fachmann bekannten hydroxyfunktionellen Verbindungen eines Molekulargewichts von 62 bis 250 g/mol mit einer mittleren Hydroxylfunktionalität von 2,5 bis 5, besonders bevorzugt 2,8 bis 3,2.

Beispiele für derartige niedermolekulare Akohole b2) sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-1,2, Pentandiol-1,5, Hexandiol-1,6, 2,2-Dimethyl-1,3-propandiol, 1,4-Di-hydroxycyclohexan, 1,4-Dimethylolcyclohexan, Octandiol-1,8, Decandiol-1,10, Dodecan-diol-1,12, Glyzerin, Trimethylolethan, Trimethylolpropan, Pentaerythrit, Dipentaerythrit sowie deren Gemische. Bevorzugt sind Glyzerin, Trimethylolpropan und Pentaerythrit, besonders bevorzugt ist Trimethylolpropan.

Besonders bevorzugte Oligoester sind Umsetzungsprodukte aus ε-Caprolacton mit Pentaerythrit, ε-Caprolacton mit Trimethylolpropan sowie ε-Caprolacton mit Neopentylglycol. Ebenfalls besonders bevorzugt sind Oligoester aus Mischungen der genannten Alkohole z.B. Pentaerythrit, Trimethyolpropan und Neopentylglycol mit ε-Caprolacton.

Die Herstellung der Verbindungen B) aus den Komponenten b1) und b2) erfolgt in der Regel separat und wird vor der radikalischen Polymerisation ganz oder teilweise vorgelegt bevor die ungesättigten Monomere A1) bis A4) addiert und polymerisiert werden. Wird nur ein Teil der Verbindung B) oder der Komponenten b1) und b2) vorgelegt, so erfolgt die Zugabe der restlichen Mengen der Verbindung B) je nach Viskosität der Reaktionsmischung während oder nach der Polymerisation.

Die Menge an der Verbindung B) bzw. der Monomermischung aus b1) und b2) beträgt 5 bis 60 Gew.-%, bevorzugt 7 bis 35 Gew.-% und besonders bevorzugt 10 bis 30 Gew.-%, bezogen auf die Menge der Polymermischung (P'). Die Menge an Polyester C) wird dabei so gewählt, dass die Gewichtsanteile der Komponenten A1) bis A4 ) zu C) 25 : 75 bis 90 : 10, bevorzugt 35 : 65 bis 85 : 15 und besonders bevorzugt 50 : 50 bis 80 : 20 betragen.

Geeignete Polyesterpolyole C) werden durch eine an sich bekannte Polykondensation der Bausteine, ausgewählt aus der Gruppe der Verbindungen:
C1) aliphatische und/oder cycloaliphatische und/oder aromatische Mono-, Di-, Tri- oder Tetracarbonsäuren oder deren Anhydride,
C2) di- und/oder höherfunktionelle Alkohole,
C3) einwertige Alkohole,
C4) Hydroxycarbonsäuren, Lactone, Aminoalkohole und/oder Aminocarbonsäuren
hergestellt.

Als geeignete Carbonsäuren C1) kommen Monocarbonsäuren wie z.B. Benzoesäure, Cyclohexancarbonsäure, 2-Ethylhexansäure, Capronsäure, Caprylsäure, Caprinsäure, Laurinsäure, natürliche und synthetische Fettsäuren, als Dicarbonsäuren und/oder Anhydride z.B. Phthalsäure, Phthalsäureanhydrid, Isophthalsäure, Hexahydrophthalsäure, Hexahydrophthalsäureanhydrid, Bernsteinsäure, Bernsteinsäureanhydrid, Adipinsäure, Dodecandisäure, hydrierte Dimerfettsäuren und als höherfunktionelle Carbonsäuren bzw. Anhydride z.B. Trimellithsäure und Trimellithsäureanhydrid sowie Mischungen dieser Verbindungen in Frage. Bevorzugt sind Dicarbonsäuren und Dicarbonsäureanhydride. Darüber hinaus kommen auch ungesättigte Carbonsäuren, wie z.B. Tetrahydrophthalsäure, Tetrahydrophthalsäureanhydrid, Maleinsäureanhydrid, Fumarsäure, Crotonsäure, ungesättigte Fettsäuren, wie z.B. Sojaölfettsäure, Tallölfettsäure sowie Gemische dieser und anderer ungesättigter Mono- oder Dicarbonsäuren sowie Mischungen dieser Verbindungen in Frage. Bevorzugt sind Dicarbonsäuren und Dicarbonsäureanhydride. Besonders bevorzugt sind cyclische Dicarbonsäuren wie Phthalsäure, Phthalsäureanhydrid, Isophthalsäure, Hexahydrophthalsäure oder Hexahydrophthalsäureanhydrid.

Als Komponente C2) sind geeignet (Cyclo-)Alkandiole (d.h. zweiwertige Alkohole mit (cyclo)-aliphatisch gebundenen Hydroxylgruppen) des Molekulargewichtsbereichs 62 g/mol bis 286 g/mol, wie z.B. Ethandiol, 1,2- und 1,3-Propandiol, 1,2-, 1,3- und 1,4-Butandiol, 1,4-Butendiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z.B. Diethylenglykol, Triethylenglykol, Tetraethylenglykol, Dipropylenglykol, Tripropylenglykol, Polyethylen-, Polypropylen- oder Polybutylenglykole mit einem maximalen zahlenmittleren Molekulargewicht von 2000 g/mol, bevorzugt 1000 g/mol und besonders bevorzugt von 500 g/mol. Umsetzungsprodukte der zuvor genannten Diole mit ε-Caprolacton können ebenfalls als Diole zum Einsatz gelangen. Als drei- und höherwertige Alkohole sind z.B. Glycerin, Trimethylolpropan, Pentaerythrit, Dipentaerythrit und Sorbit sowie Mischungen dieser Verbindungen geeignet. Bevorzugt sind Hexandiol, Neopentylglykol, 1,4-Cylohexandimethanol und Trimethylolpropan.

Gegebenenfalls können auch Monoalkohole C3) wie z.B. Ethanol, 1- und 2-Propanol, 1- und 2-Butanol, 1- Hexanol, 2-Ethylhexanol, Cyclohexanol und Benzylalkohol sowie Mischungen dieser Verbindungen eingesetzt werden. Bevorzugt ist 2-Ethylhexanol.

Gegebenenfalls können als Komponente C4) Hydroxycarbonsäuren von 2 - 10 Kohlenstoffatomen, Lactone derartiger Säuren, Aminoalkohole des Molekulargewichtsbereichs von 61 bis 300 und/oder Aminocarbonsäuren des Molekulargewichtsbereichs 75 bis 400 wie z.B. Hydroxypivalinsäure, Dimethylolpropion-, Dimethylolbuttersäure, Milchsäure, Äpfelsäure, Weinsäure, ε-Caprolacton, Aminoethanol, Aminopropanol, Diethanolamin, Aminoessigsäure oder Aminohexansäure sowie Mischungen dieser Verbindungen verwendet werden. Bevorzugt ist ε-Caprolacton.

Die Herstellung des Polyesters C) kann gegebenenfalls unter Zuhilfenahme von üblichen Veresterungskatalysatoren, bevorzugt nach dem Prinzip der Schmelz- oder Azeotropkondensation bei Temperaturen von 140 bis 240°C unter Wasserabspaltung erfolgen.

Im Allgemeinen erfolgt das Verfahren zur Herstellung der erfindungsgemäßen Polyester-Polyacrylat-Dispersionen nach den dem Fachmann bekannten Verfahren. Typischerweise wird dazu in einem Reaktionsgefäß die Verbindung B) oder aber die Monomermischung aus b1) und b2) vorgelegt und die ungesättigten Monomere A1) bis A4) zudosiert und unter Einsatz eines Radikalinitiators polymerisiert. Es ist darüber hinaus auch möglich die Verbindung/-en B) oder aber die Monomermischung aus b1) und b2) vor der Polymerisation nur anteilig vorzulegen, um bereits zu Beginn der Polymerisation eine Durchmischung der Reaktionskomponenten A1) bis A4) zu gewährleisten, die weitere Zugabe der Verbindung B) oder der Monomermischung b1) und b2) erfolgt dann während der Polymerisation der Monomeren A1) bis A4).

Die Polymerisation wird im Allgemeinen bei 40 bis 200°C, bevorzugt bei 60 bis 180°C, besonders bevorzugt bei 80 bis 160°C durchgeführt.

Gegebenenfalls können zusätzliche organische Lösemittel in untergeordneter Menge zum Einsatz kommen, insbesondere dann, wenn sie zum Verdünnen der Initiatoren dienen. Geeignete Hilfslösemittel sind beliebige in der Lacktechnologie bekannte Lösemittel, wie z.B. Alkohole, Ether, ethergruppenhaltige Alkohole, Ester, Ketone, N-Methylpyrrolidon oder unpolare Kohlenwasserstoffe bzw. Gemische dieser Lösemittel. Die Lösemittel werden in solchen Mengen eingesetzt, dass ihr Gehalt in der fertigen Dispersion 0 bis 5 Gew.-%, bevorzugt 1 bis 3 Gew.-% beträgt. Falls erforderlich können die eingesetzten Lösemittel durch eine Destillation wieder teilweise oder ganz entfernt werden.

Als Initiatoren für die Polymerisationsreaktion eignen sich organische Peroxide wie Di-tert.-Butylperoxid, Dicumylperoxid, 2,5-Dimethyl-2,5-di(tert.-butylperoxy)hexan, tert.-Butylperoxybenzoat, Dibenzoylperoxid, tert. Butylperisobutyrat oder -tert.-Butylperoxy-2-ethylhexanoat und Azoverbindungen wie Azobisisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der oben genannten Art eingesetzt werden.

Die Herstellung des Polymerisats P) erfolgt bevorzugt in zwei Schritten (i) und (ii). Im ersten Schritt (i) wird eine hydroxyfunktionelle Monomermischung (A') mit einer OH-Zahl von 12 bis 350 mg KOH/g Feststoff, bevorzugt 20 bis 200 mg KOH/g Feststoff und einer Säurezahl von 0 bis 50 mg KOH/g Feststoff, bevorzugt 0 bis 30 mg KOH/g Feststoff zu der bereits vorgelegten Verbindung B) gegeben. Dabei werden 50 bis 90 Gew.-%, bevorzugt 60 bis 80 Gew.-% Komponente A1), 2 bis 50 Gew.-%, bevorzugt 5 bis 35 Gew.-% Komponente A2), 0 bis 7 Gew.-%, bevorzugt 0 bis 5 Gew.-% Komponente A3) und 0 bis 50 Gew.-%, bevorzugt 3 bis 30 Gew.-% Komponente A4) miteinander vermischt.

In einem anschließenden Schritt (ii) wird zu der aus Schritt (i) erhaltenen Reaktionsmischung eine weitere Monomermischung (A") aus Monomeren der Komponenten A1) bis A4) zugegeben, wobei diese Monomermischung eine OH-Zahl von 10 bis 350 mg KOH/g Feststoff, bevorzugt 18 bis 200 mg KOH/g Feststoff und eine Säurezahl von 50 bis 300 mg KOH/g Feststoff, bevorzugt 70 bis 200 mg KOH/g Feststoff aufweist. Die Monomermischung (A'') aus Schritt (ii) enthält dabei 45 bis 85 Gew.-%, bevorzugt 55 bis 75 Gew.-% Komponente A1), 1 bis 50 Gew.-%, bevorzugt 5 bis 35 Gew.-% Komponente A2), 3 bis 30 Gew.-%, bevorzugt 8 bis 22 Gew.-% Komponente A3) und 0 bis 50 Gew.-%, bevorzugt 3 bis 30 Gew.-% Komponente A4).

Die %-Angaben der Monomerzusammensetzung (A') und (A") addieren sich zu 100 Gew.-%.

Die Monomermengen der beiden Polymerisatherstellungen sind dabei so zu wählen, dass das Massenverhältnis der Momomermischung (A') zu Monomermischung (A") 10:1 1 bis 1:2, bevorzugt 6:1 bis 2:1 beträgt.

Statt eines mehrstufigen Polymerisationsverfahren ist es ebenfalls möglich den Prozess kontinuierlich (Gradientenpolymerisation) durchzuführen, d.h. es wird eine Monomermischung mit sich zeitlich ändernder Zusammensetzung zugegeben, wobei bevorzugt die hydrophilen Monomeranteile gemäß der Komponenten A3) und gegebenenfalls A4) gegen Ende des Zulaufs höher sind als zu Beginn.

Die Polymerisate (P) weisen zahlenmittlere Molekulargewichte Mₙ von 500 bis 30 000 g/mol, bevorzugt 1 000 bis 15 000 g/mol, besonders bevorzugt 1 500 bis 10 000 g/mol auf.

Die Addition des Polyesters C) erfolgt nach der Polymerisation der Monomerzusammensetzung A'), bevorzugt aber nach der Poymerisation der Monomermischung A") und ganz besonders bevorzugt vor der Zugabe eines Neutralisationsmittels. Der Polyester C) wird bei Temperaturen von 40 - 200°C, bevorzugt 60 - 180°C und besonders bevorzugt bei 80 - 160°C zum Polymerisat A'), bevorzugt P) addiert und mit dem vorgelegten Harz vermischt. Der Polyester kann zur Erniedrigung der Viskosität und damit zur Erleichterung der Handhabbarkeit anteilig Lösungsmittel in Mengen von 0,5 bis 95 %, bevorzugt 1 bis 60 % und besonders bevorzugt 1 - 40 %, gemessen an der gesamten Lösungsmittelmenge des Polymerisatgemisches (P') enthalten. Darüber hinaus ist es auch möglich Teile der Komponente B) dem Polyester C) zuzuschlagen.

Vor, während oder nach der Dispergierung der hydroxyfunktionellen Polymerisate (P) in Wasser werden die vorhandenen Säuregruppen zumindest anteilig durch Zugabe geeigneter Neutralisationsmittel in ihre Salzform überführt. Bevorzugt werden potenziell ionische Gruppen des Polymerisats (P) vor der Dispergierung neutralisiert. Als Neutralisationsmittel geeignet sind organische Amine oder wasserlösliche anorganische Basen, wie z.B. lösliche Metallhydroxide, -carbonate oder -hydrogencarbonate.

Beispiele für geeignete Amine sind N-Methylmorpholin, Triethylamin, Ethyldiisopropylamin, N,N-Dimethylethanolamin, N,N-Dimethylisopropanolamin, N-Methyldiethanolamin, Diethylethanolamin, Triethanolamin, Butanolamin, Morpholin, 2-Aminomethyl-2-methyl-propanol oder Isophorondiamin. In Mischungen kann auch anteilig Ammoniak eingesetzt werden. Bevorzugt sind Triethanolamin, N,N-Dimethylethanolamin und Ethyldiisopropylamin.

Die Neutralisationsmittel werden in solchen Mengen zugesetzt, dass in Summe ein theoretischer Neutralisationsgrad [der Säuregruppen] von 40 bis 150 %, bevorzugt 60 bis 120 % vorliegt. Der Neutralisationsgrad versteht sich dabei als molares Verhältnis von zugesetzten basischen Gruppen der Neutralisationskomponente zu Säurefunktionen des Polymerisats (P).

Der pH-Wert der erfindungsgemäßen Polyester-Polyacrylat-Dispersion beträgt 6 bis 10, bevorzugt 6,5 bis 9.

Die erfindungsgemäßen wässrigen, hydroxyfunktionellen Polyester-Polyacrylat-Dispersionen weisen einen Festkörpergehalt von 25 bis 70 Gew.-%, bevorzugt 35 bis 60 Gew.-%, besonders bevorzugt von 40 bis 55 Gew.-% auf.

Die erfindungsgemäßen Polyester-Polyacrylat-Dispersionen können zu wässrigen Beschichtungsmitteln verarbeitet werden. Durch Kombination mit Vernetzern können dabei, je nach Reaktivität oder gegebenenfalls Blockierung der Vernetzer, sowohl Einkomponentenlacke als auch Zweikomponentenlacke hergestellt werden.

Ebenfalls Gegenstand der vorliegenden Erfindung sind wässrige Beschichtungsmittel enthaltend die erfindungsgemäßen wässrigen Polyester-Polyacrylat-Dispersionen.

Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Temperatursteigerung bewirkt werden.

Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden. Die Verwendung der erfindungsgemäßen Polyester-Polyacrylat-Dispersionen in Zweikomponentenlacken ist bevorzugt.

Geeignete OH-gruppenreaktive Vernetzer sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugt werden als Vernetzer Polyisocyanate, die typischerweise 2 oder mehr NCO-Gruppen pro Molekül aufweisen und beispielsweise auf Isophorondiisocyanat, Hexamethylendiisocyanat, 1,4-Diisocyanatocyclohexan, Bis-(4-iso-cyanatocyclohexan)-methan, 1,3-Diisocyanatobenzol, Triisocyanatononan oder den isomeren 2,4- und 2,6-TDI basieren und die ferner Urethan-, Isocyanurat und/oder Biuretgruppen aufweisen können. Gegebenenfalls können die Polyisocyanate auch blockiert sein.

Besonders bevorzugt ist der Einsatz niedrigviskoser, gegebenenfalls hydrophilierter Polyisocyanate der vorstehend genannten Art auf Basis aliphatischer oder cycloaliphatischer Isocyanate.

Die als Vernetzer eingesetzten Polyisocyanate weisen bei 23°C im Allgemeinen eine Viskosität von 10 bis 5 000 mPas auf und können auch, falls zur Viskositätseinstellung gewünscht in Abmischung mit geringen Mengen an inerten Lösemitteln zum Einsatz gelangen.

Die Polymerisate (P) sind im Allgemeinen ausreichend hydrophil, so dass auch hydrophobe Vernetzerharze ohne zusätzliche Emulgatoren dispergiert werden können. Eine Verwendung externer Emulgatoren ist dadurch jedoch nicht ausgeschlossen.

Wasserlösliche oder dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich. Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985 (S. 3, Z 55 bis S. 4 Z. 5) beschrieben.

Gut geeignet sind auch die in der EP-A 959 087 (S. 3 Z. 39 bis 51) beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 100 078 21 (S. 2 Z. 66 bis S. 3 Z. 5) beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE 100 24 624 (S. 3 Z. 13 bis 33) beschrieben sind.

Prinzipiell ist natürlich auch der Einsatz von Mischungen verschiedener Vernetzerharze möglich.

Vor, während oder nach der Herstellung der erfindungsgemäßen wässrigen, Polyester-Polyacrylat-Dispersion können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Diese Hilfs- und Zusatzmittel können auch dem Beschichtungsmittel, enthaltend die erfindungsgemäßen wässrigen, hydroxyfunktionellen Polyester-Polyacrylat-Dispersionen, zugesetzt werden.

Die wässrigen Beschichtungsmittel, enthaltend die erfindungsgemäßen wässrigen, hydroxyfunktionellen Polyester-Polyacrylat-Dispersionen, eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Die wässrigen Beschichtungsmittel, enthaltend die erfindungsgemäßen wässrigen, Polyester-Polyacrylat-Dispersionen, werden zur Herstellung von Grundierungen, Füllern, pigmentierter oder transparenter Decklacke, Klarlacke und Hochglanzlacke sowie Einschichtlacke, die in der Einzel- und Serienapplikation, z.B. im Bereich der Industrielackierung, Automobil-Erst- und -Reparaturlackierung Anwendung finden können, eingesetzt. Bevorzugt ist der Einsatz als Mehrschichtenaufbau, wobei die oberste Schicht eine Deck- oder Klarlack-Schicht ist, die durch Aushärtung der erfindungsgemäßen wässrigen, Polyester-Polyacrylat-Dispersion hergestellt wird.

Die Herstellung der Beschichtungen kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen wässrigen, hydroxyfunktionellen Polyester-Polyacrylat-Dispersionen, können jedoch auch nach anderen Methoden, beispielsweise durch Streichen, Rollen oder Rakeln appliziert werden.

### Beispiele:

Soweit nicht abweichend angegeben beziehen sich alle Prozentangaben auf Gewichtsprozent.

Viskositätsmessungen wurden mit einem Kegel-Platte-Viskosimeter Pysica Viscolab® LC3 ISO der Firma Physica, Stuttgart, Deutschland nach DIN 53019 bei einem Schergefälle von 40 s⁻¹ durchgeführt.

Die Bestimmung der mittleren Teilchengröße erfolgte mittels Laser-Korrelations-Spektroskopie (HPPS, Malvern Instruments, Herrenberg, DE).

Die angegebenen OH-Zahlen wurden ausgehend von den eingesetzten Monomeren berechnet.

| | |
|---|---|
| Säurezahlen: | Bestimmungsmethode, DIN ISO 3682 |
| Peroxan® DB: | Di-tert.-butylperoxid, Pergan GmbH, DE. |

### Beispiel 1: Reaktiwerdünner

In einem 15 1-Reaktionsgefäß mit Rühr-, Kühl- und Heizvorrichtung werden 359,4 g (3,15 mol) ε-Caprolacton zusammen mit 140,8 g (1,05 mol) Trimethylolpropan vorgelegt und innerhalb von 90 Minuten unter Rühren auf 100°C aufgeheizt. Dann wird die Mischung zügig, innerhalb von 40 Minuten, auf 150°C geheizt und dort für drei Stunden unter Rühren gehalten. Anschließend wird auf Raumtemperatur gekühlt und die klare, dünnflüssige Mischung abgelassen.

| | |
|---|---|
| OH Zahl: | 350 mgKOH/g |
| Viskosität: | 28 mPas/23°C (D = 1000) |

### Beispiel 2: Polyestervorstufe

In einem 20 1-Reaktionsgefäß mit Rühr-, Kühl- und Heizvorrichtung und Wasserabscheider werden bei 20°C 1659 g Trimethylolpropan, 5146 g Neopentylglykol eingewogen und bei 100°C aufgeschmolzen. Dann wurden unter Rühren 122 g Maleinsäureanhydrid, 2059 g Isophthalsäure und 5666 g Phtalsäureanhydrid zugesetzt und die Mischung innerhalb von einer Stunde unter Durchleiten eines Stickstoffstroms auf 150°C aufgeheizt. Im Anschluss wird die Temperatur innerhalb von 6 h auf 200°C gestellt und so lange im Stickstoffstrom kondensiert, bis die Säurezahl unter 8 mg KOH/g Substanz sinkt.

| | |
|---|---|
| Säurezahl: | 5,9 mgKOH/g |
| OH-Zahl: | 122 mgKOH/g |

### Beispiel 3:

In einem 4 1-Reaktionsgefäß mit Rühr-, Kühl- und Heizvorrichtung werden 123,4 g Reaktivverdünner gemäß Beispiel 1 und auf 140°C aufgeheizt. Bei dieser Temperatur wird 11,3 g Peroxan^{®} DB innerhalb von 125 Min. zugetropft. Fünf Minuten nachdem mit der Dosierung der Initiatorlösung begonnen wurde, wird innerhalb von 2h eine Monomermischung aus 185 g Methylmethacrylat, 150 g Hydroxyethylmethacrylat, 50 g Butylacrylat, 50 g Isobutylmethacrylat und 35 g Styrol zudosiert. Direkt im Anschluß wird innerhalb von 60 Min. eine Mischung aus 92,5 g Methylmethacrylat, 75 g Hydroxyethylmethacrylat, 25 g Butylacrylat, 25 g Isobutylmethacrylat 17,5 g Styrol und 45 g Acrylsäure zudosiert; parallel dazu wird eine Lösung von 11,3 g Di-tert.-butylperoxid während 2 h gleichmäßig zudosiert. Anschließend wird 1 Stunde bei 140°C nachgerührt bevor 750 g des auf 130 °C geheizten Polyesters gemäß Beispiel 2 - gelöst in 124 g Butylglykol - zugegeben und für eine weitere Stunde verrührt wird. Danach wird auf 100°C abgekühlt und 47 g Dimethylethanolamin zugegeben. Nach 20 minütiger Homogenisierung wird innerhalb von 10 Minuten bei 90°C mit 1650 g Wasser dispergiert. Bei der erreichten Mischtemperatur von 70°C wird für 1 h und bei 48°C für 2,5 weitere Stunden, bevor die Dispersion filtriert und auf Raumtemperatur abgekühlt wird.

| | |
|---|---|
| OH-Gehalt (Festkörper) | 4,6 % (theoretisch berechnet) |
| Säurezahl (Festkörper) | 25,9 mg KOH/g |
| Festkörpergehalt | 47 % |
| Viskosität | 5400 mPas/23°C |
| pH-Wert (10 %ig in Wasser) | 7,6 |
| Neutralisationsgrad | 75 % |
| Mittlere Teilchengröße | 170 nm |
| Colösergehalt | 3,67 Gew.-% bezogen auf Dispersion |

### Beispiel 4:

In einem 4 1-Reaktionsgefäß mit Rühr-, Kühl- und Heizvorrichtung werden 45,7 g Trimethylolpropan und 77,7 g ε Caprolacton vorgelegt und innerhalb von 90 Minuten unter Rühren auf 100°C aufgeheizt. Dann wird die Mischung zügig, innerhalb von 40 Minuten, auf 150°C geheizt und dort für drei Stunden unter Rühren gehalten. Anschließend wird auf 140°C abgekühlt und mit 78,5 g Butlydiglykol versetzt. Anschließend wird eine Lösung aus 11,3 g Peroxan^{®} DB in 22,5 g Butyldiglykol innerhalb von 125 Min. zugetropft. Fünf Minuten nachdem mit der Dosierung der Initiatorlösung begonnen wurde, wird innerhalb von 2h eine Monomermischung aus 185 g Methylmethacrylat, 150 g Hydroxyethylmethacrylat, 50 g Butylacrylat, 50 g Isobutylmethacrylat und 35 g Styrol zudosiert. Direkt im Anschluss wird innerhalb von 60 Min. eine Mischung aus 92,5 g Methylmethacrylat, 75 g Hydroxyethylmethacrylat, 25 g Butylacrylat, 25 g Isobutylmethacrylat 17,5 g Styrol und 45 g Acrylsäure zudosiert; parallel dazu wird eine Lösung von 11,3 g Di-tert.-butylperoxid in 23,5 g Butyldiglykol während 2 h gleichmäßig zudosiert. Anschließend wird 1 Stunde bei 140°C nachgerührt, 750 g des auf 120°C geheizten Polyester gemäß Beispiel 2 zugesetzt und für eine weitere Stunde nachgerührt. Danach wird bei 100°C 45 g Dimethylethanolamin zugegeben. Nach 20 Minuten des Homogenisieren wird innerhalb von 10 Minuten bei 90°C mit 1725 g Wasser dispergiert. Bei der erreichten Mischtemperatur von 72°C wird weitere 1,5 h homogenisiert, bevor die Dispersion dann filtriert und auf Raumtemperatur abgekühlt wird.

| | |
|---|---|
| OH-Gehalt (Festkörper) | 4,60 % (theoretisch berechnet) |
| Säurezahl (Festkörper) | 25,9 mg KOH/g |
| Festkörpergehalt | 46 % |
| Viskosität | 3110 mPas/23°C |
| pH-Wert (10 %ig in Wasser) | 7,5 |
| Neutralisationsgrad | 75 % |
| Mittlere Teilchengröße | 185 nm |
| Colösergehalt | 1,5 Gew.-% bezogen auf Dispersion |

## Patentansprüche

1. Verfahren zur Herstellung wässriger Polyester-Polyacrylat-Dispersionen mit einem Gehalt an organischen Lösungsmitteln von 0 bis 5 Gew.-%, bezogen auf die Dispersion, **dadurch gekennzeichnet, dass** in einem ersten Schritt ein Polymerisat (P) durch Polymerisation
A) einer Mischung zur radikalischen Copolymerisation befähigter Vinylmonomeren A1) bis A4) enthalten Bausteine ausgewählt aus der Gruppe der Verbindungen:
A1) OH-gruppenfreie (Meth)acrylsäureester, gegebenenfalls in Mischung mit Vinylaromaten,
A2) hydroxyfunktionelle Vinylmonomere und/oder hydroxyfunktionelle (Meth)acrylsäureester,
A3) ionische und/oder potentiell ionische, zur radikalischen Polymerisation befähigte Monomere sowie
A4) weitere, von den Verbindungen der Komponenten A1) bis A3) verschiedene, zur radikalische Polymerisation befähigte Monomere
in Gegenwart
B) mindestens einem Oligoester, basierend auf lactongruppenhaltigen Verbindungen mit einer Hydroxylzahl von 145 mg KOH/g bis 710 mg KOH/g, einer Säurezahl von ≤ 0,5 mg KOH/g und einer mittleren OH Funktionalität von 2,5 bis 5
hergestellt wird, und dann in einem zweiten Schritt mit
C) einem oder mehreren Polyesterpolyol(en) mit einer Hydroxylzahl von 10 bis 500 mg KOH/g Substanz und einer Säurezahl von > 0,5 bis ≤ 30 mg KOH/g Substanz vermischt wird
und das so erhaltene Polymerisatgemisch anschließend in einem weiteren Schritt vor oder nach Zugabe eines Neutralisationsmittels in Wasser dispergiert wird.

2. Verfahren gemäß Anspruch 1, **dadurch gekennzeichnet, dass** in einem Reaktionsgefäß die Verbindung B) oder aber die Monomermischung aus Lactonen b1) und Di- und/oder höherfunktionellen Alkoholen b2) vorgelegt und die ungesättigten Monomere A1) bis A4) zudosiert und unter Einsatz eines Radikalinitiators polymerisiert werden.

3. Verfahren gemäß Anspruch 2, **dadurch gekennzeichnet, dass** eine zweistufige Zugabe und Polymerisation der ungesättigten Monomere A1) bis A4) erfolgt, wobei im ersten Schritt (i) eine hydroyfunktionelle Monomermischung (A') aus 50 bis 90 Gew.-% Komponente A1), 2 bis 50 Gew.-% Komponente A2), 0 bis 7 Gew.-% Komponente A3) und 0 bis 50 Gew.-% Komponente A4) mit einer OH-Zahl von 12 bis 350 mg KOH/g Feststoff und einer Säurezahl von 0 bis 50 mg KOHg Feststoff zu der bereits vorgelegten Verbindung B) gegeben wird und in einem anschließenden Schritt (ii) zu der aus Schritt (i) erhaltenen Reaktionsmischung eine weitere Monomermischung (A") aus 45 bis 85 Gew.-% Komponente A1), 1 bis 50 Gew.-% Komponente A2), 3 bis 30 Gew.-% Komponente A3) und 0 bis 50 Gew.-% Komponente A4) zugegeben wird, wobei diese Monomermischung eine OH-Zahl von 10 bis 350 mg KOH/g Feststoff und eine Säurezahl von 50 bis 300 mg KOH/g Feststoff aufweist.

4. Verfahren gemäß Anspruch 1, **dadurch gekennzeichnet, dass** der Oligoester C) ein Umsetzungsprodukt aus ε-Caprolacton mit Pentaerythrit ist.

5. Verfahren gemäß Anspruch 1, **dadurch gekennzeichnet, dass** der Oligoester C) ein Umsetzungsprodukt aus ε-Caprolacton mit Trimethylolpropan ist.

6. Verfahren gemäß Anspruch 1, **dadurch gekennzeichnet, dass** der Oligoester C) ein Umsetzungsprodukt aus ε-Caprolacton mit Neopentylglycol ist.

7. Verfahren gemäß Anspruch 1, **dadurch gekennzeichnet, dass** der Oligoester C) ein Umsetzungsprodukt aus Pentaerythrit, Trimethylolpropan und Neopentylglycol mit ε-Caprolacton ist.

8. Polyester-Polyacrylat-Dispersionen erhältlich durch Verfahren gemäß Anspruch 1.

9. Polyester-Polyacrylat-Dispersionen gemäß Anspruch 8, **dadurch gekennzeichnet, dass** der Gehalt an Colöser 1 bis 3 Gew.-%, bezogen auf die Dispersion, beträgt.

10. Verwendung der Polyester-Polyacrylat-Dispersionen gemäß Anspruch 8 zur Herstellung von Zweikomponenten-Beschichtungen.

11. Verwendung der Polyester-Polyacrylat-Dispersionen gemäß Anspruch 8 zur Herstellung von Deck- und Klarlacken.

## Claims

1. Process for preparing aqueous polyester-polyacrylate dispersions having an organic solvent content of 0 to 5% by weight based on the dispersion, **characterized in that** in a first step a polymer (P) is prepared by polymerizing
A) a mixture of vinyl monomers A1) to A4), capable of free-radical copolymerization, containing building blocks selected from the group of the following compounds:
A1) OH-free (meth)acrylic esters, optionally in a mixture with vinylaromatics,
A2) hydroxy-functional vinyl monomers and/or hydroxy-functional (meth)acrylic esters,
A3) ionic and/or potentially ionic monomers capable of free-radical polymerization, and
A4) further monomers capable of free-radical polymerization and different from the compounds of components A1) to A3)
in the presence
B) of at least one oligoester, based on compounds containing lactone groups, having a hydroxyl number of 145 mg KOH/g to 710 mg KOH/g, an acid number of ≤ 0.5 mg KOH/g and an average OH functionality of 2.5 to 5,
and then in a second step is mixed with
C) one or more polyester polyols having a hydroxyl number of 10 to 500 mg KOH/g solids and an acid number of > 0.5 to ≤ 30 mg KOH/g solids
and the polymer mixture thus obtained is then dispersed in water in a further step, before or after addition of a neutralizing agent.

2. Process according to Claim 1, **characterized in that** a reaction vessel is charged with the compound B) or else with the monomer mixture of lactones b1) and alcohols b2) having a functionality of two and/or more and the unsaturated monomers A1) to A4) are metered in and polymerized using a free-radical initiator.

3. Process according to Claim 2, **characterized in that** a two stage addition and polymerization of the unsaturated monomers A1) to A4) takes place, in the first step (i) a hydroxy-functional monomer mixture (A') consisting of 50% to 90% by weight of component A1), 2% to 50% by weight of component A2), 0 to 7% by weight of component A3) and 0 to 50% by weight of component A4) having an OH number of 12 to 350 mg KOH/g solids and an acid number of 0 to 50 mg KOH/g solids being added to the compound B), already introduced initially, and in a subsequent step (ii) a further monomer mixture (A") consisting of 45% to 85% by weight of component A1), 1% to 50% by weight of component A2), 3% to 30% by weight of component A3) and 0 to 50% by weight of component A4) being added to the reaction mixture obtained from step (i), this monomer mixture having an OH number of 10 to 350 mg KOH/g solids and an acid number of 50 to 300 mg KOH/g solids.

4. Process according to Claim 1, **characterized in that** the oligoester C) is a reaction product of ε-caprolactone with pentaerythritol.

5. Process according to Claim 1, **characterized in that** the oligoester C) is a reaction product of ε-caprolactone with trimethylolpropane.

6. Process according to Claim 1, **characterized in that** the oligoester C) is a reaction product of ε-caprolactone with neopentyl glycol.

7. Process according to Claim 1, **characterized in that** the oligoester C) is a reaction product of pentaerythritol, trimethylolpropane and neopentyl glycol with ε-caprolactone.

8. Polyester-polyacrylate dispersions obtainable by processes according to Claim 1.

9. Polyester-polyacrylate dispersions according to Claim 8, **characterized in that** the amount of cosolvent is 1% to 3% by weight, based on the dispersion.

10. Use of polyester-polyacrylate dispersions according to Claim 8 for preparing two-component coatings.

11. Use of polyester-polyacrylate dispersions according to Claim 8 for preparing topcoat and clearcoat materials.

## Revendications

1. Procédé pour la préparation de dispersions aqueuses de polyester-polyacrylate ayant une teneur en solvants organiques de 0 à 5 % en poids, par rapport à la dispersion, **caractérisé en ce que** dans une première étape on prépare un polymérisat (P) par polymérisation
A) d'un mélange de monomères vinyliques A1) à A4) aptes à la copolymérisation radicalaire, contenant des composants choisis dans le groupe des composés :
A1) esters d'acide (méth)acrylique exempts de groupes OH, éventuellement en mélange avec des composés vinylaromatiques,
A2) monomères vinyliques à fonction hydroxy et/ou esters d'acide (méth)acrylique à fonction hydroxy,
A3) monomères ioniques et/ou potentiellement ioniques, aptes à la polymérisation radicalaire ainsi que
A4) autres monomères aptes à la polymérisation radicalaire, différents des composés A1) à A3)
en présence
B) d'au moins un oligoester à base de composés contenant des groupes lactone, ayant un indice de groupes hydroxy de 145 mg de KOH/g à 710 mg de KOH/g, un indice d'acide de ≤ 0,5 mg de KOH/g et une fonctionnalité OH moyenne de 2,5 à 5,
et ensuite, dans une deuxième étape, on le mélange avec
C) un ou plusieurs polyesterpolyol(s) ayant un indice de groupes hydroxy de 10 à 500 mg de KOH/g de substance et un indice d'acide de > 0,5 à ≤ 30 mg de KOH/g de substance,
et ensuite dans une autre étape, avant ou après addition d'un agent de neutralisation, on disperse dans de l'eau le mélange de polymérisats ainsi obtenu.

2. Procédé selon la revendication 1, **caractérisé en ce que** dans un récipient de réaction on dispose au préalable le composé B) ou bien le mélange de monomères à base de lactones b1) et d'alcools difonctionnels et/ou à plus haut degré de fonctionnalisation b2) et on ajoute par addition dosée les monomères insaturés A1) à A4) et on effectue la polymérisation en utilisant un amorceur de radicaux.

3. Procédé selon la revendication 2, **caractérisé en ce qu'**on effectue une addition en deux étapes et une polymérisation des monomères insaturés A1) à A4), en ajoutant au composé B) déjà disposé au préalable, dans la première étape (i), un mélange de monomères à fonction hydroxy (A') composé de 50 à 90 % en poids de composant A1), 2 à 50 % en poids de composant A2), 0 à 7 % en poids de composant A3) et 0 à 50 % en poids de composant A4) ayant un indice de groupes OH de 12 à 350 mg de KOH/g de matière solide et un indice d'acide de 0 à 50 mg de KOH/g de matière solide et, dans une étape ii) subséquente en ajoutant au mélange réactionnel obtenu à partir de l'étape (i) un autre mélange de monomères (A") composé de 45 à 85 % en poids de composant A1), 1 à 50 % en poids de composant A2), 3 à 30 % en poids de composant A3) et 0 à 50 % en poids de composant A4), ce mélange de monomères présentant un indice de groupes OH de 10 à 350 mg de KOH/g de matière solide et un indice d'acide de 50 à 300 mg de KOH/g de matière solide.

4. Procédé selon la revendication 1, **caractérisé en ce que** l'oligoester C) est un produit de réaction d' 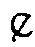 -caprolactone avec du pentaérythritol.

5. Procédé selon la revendication 1, **caractérisé en ce que** l'oligoester C) est un produit de réaction d' 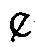 -caprolactone avec du triméthylpropane.

6. Procédé selon la revendication 1, **caractérisé en ce que** l'oligoester C) est un produit de réaction d' 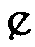 -caprolactone avec du néopentylglycol.

7. Procédé selon la revendication 1, **caractérisé en ce que** l'oligoester C) est un produit de réaction de pentaérythritol, triméthylolpropane et néopentylglycol avec l' 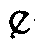 -caprolactone.

8. Dispersions de polyester-polyacrylate pouvant être obtenues par le procédé selon la revendication 1.

9. Dispersions de polyester-polyacrylate selon la revendication 8, **caractérisées en ce que** la teneur en cosolvant vaut de 1 à 3 % en poids, par rapport à la dispersion.

10. Utilisation des dispersions de polyester-polyacrylate selon la revendication 8, pour la production de revêtements bicomposants.

11. Utilisation des dispersions de polyester-polyacrylate selon la revendication 8, pour la production de peintures de finition et de vernis.
